# FASCICULE DE BREVET EUROPEEN

(11) **EP 1 781 460 B1**
(45) Date de publication et mention de la délivrance du brevet: **21.05.2008**
(21) Numéro de dépôt: 05773832.0
(22) Date de dépôt: 04.07.2005
(51) Int. Cl.: B29C 49/42, B65G 17/32, B65G 47/84

(54) **SYSTÈME DE CONVOYAGE DE PRÉFORMES COMPORTANT UN MOYEN D'ÉJECTION DES PRÉFORMES MAL SAISIES**
VORFORMFÖRDERANLAGE MIT VORRICHTUNG ZUM AUSWURF SCHLECHT ERFASSTER VORFORMEN
PREFORM CONVEYOR SYSTEM PROVIDED WITH MEANS FOR EJECTING BADLY SEIZED

(30) Priorité: 08.07.2004 FR 0451476
(43) Date de publication de la demande: 09.05.2007
(73) Titulaire: Sidel Participations, 76930 Octeville Sur Mer (FR)
(72) Inventeur: DOUDEMENT, Christophe, Sidel, F-76930 Octeville sur mer (FR)
(74) Mandataire: Kohn, Philippe
(86) Numéro de dépôt international: PCT/EP2005/053166
(87) Numéro de publication internationale: WO 2006/005694

(56) Documents cités:
- EP-A- 0 596 487
- FR-A- 2 794 109
- US-A- 4 572 355

## Description

La présente invention concerne un système de convoyage de préformes.

La présente invention concerne plus particulièrement un système de convoyage pour une installation de fabrication par soufflage de récipients en matériau thermoplastique à partir de préformes, du type comportant une série d'éléments de transport qui sont munis chacun d'au moins un dispositif de préhension destiné à porter une préforme en vue de la faire circuler en position verticale le long d'un parcours, orienté de l'amont vers l'aval, à l'intérieur de l'installation, du type dans lequel chaque dispositif de préhension est mobile suivant un axe vertical par rapport à l'élément de transport qui le porte pour, lorsqu'il est amené d'une position haute dégagée jusqu'à une position basse de préhension, s'engager axialement dans le col de la préforme et la saisir. Un tel système est décrit par exemple dans le document FR-A-2 794 109.

On trouve de tels systèmes de convoyage dans les machines de soufflage de récipients dans lesquelles le récipient est obtenu par soufflage en introduisant dans un moule de soufflage une préforme précédemment réalisée par moulage par injection. Ces machines sont par exemple utilisées pour la fabrication de bouteilles en polyéthylène téréphtalate (PET).

Ce type de machine comporte habituellement un four prévu pour chauffer les préformes à l'intérieur d'au moins un tunnel de chauffage avant l'opération de soufflage.

Ce four comporte un système de convoyage qui permet de faire circuler les préformes à l'intérieur du tunnel de chauffage.

Le système de convoyage peut par exemple être constitué d'une chaîne d'éléments de transport en forme de maillons animée d'un mouvement continu sur elle-même.

Pour saisir la préforme, chaque élément de transport comporte un dispositif de préhension qui est mobile axialement par rapport à l'élément de transport et qui, lorsqu'il est amené d'une position extrême dégagée à une position extrême de préhension, s'engage axialement dans le col de la préforme.

Pour cela, la préforme doit être amenée en dessous de l'élément de transport correspondant et elle doit être maintenue parfaitement à la verticale de celui-ci pendant toute la durée de l'opération de saisie. Or, au cours de cette opération de saisie, l'élément de transport se déplace de manière continue, si bien que la préforme doit elle aussi être déplacée de manière continue.

A cet effet, la préforme est par exemple prise en charge par une roue de transport comportant un disque qui est entraîné en rotation autour de son axe et qui est muni, à sa périphérie, d'encoches sensiblement semi-circulaires. Un guide en arc de cercle est agencé autour d'une partie de la périphérie du disque de telle sorte qu'une préforme puisse être emprisonnée radialement entre une encoche du disque et le guide. La préforme prend alors appui par une collerette située à la base de son col à la fois sur le disque et sur le guide, le col et le corps de la préforme s'étendant respectivement au-dessus et en dessous du niveau du disque. Ainsi, la préforme est portée par la roue de transport et, du fait de la rotation du disque, elle est entraînée selon une trajectoire circulaire.

Les préformes et les éléments de transports sont positionnés sur la roue de transport de manière que chaque préforme soit agencée axialement juste à la verticale du dispositif de préhension d'un des éléments de transport. Ainsi, le dispositif de préhension peut être commandé, en un point de la circonférence de la roue, vers sa position basse de préhension pour saisir la préforme par son col.

On note donc que, en ce point de la circonférence de la roue, la préforme est encore en appui sur la roue de transport et sur le guide, lequel s'achève juste après ce point pour permettre à la préforme de suivre la trajectoire de l'élément de transport.

En théorie, en ce point de la circonférence de la roue, la préforme est donc en appui par sa collerette sur la roue de transport et sa position est parfaitement définie par l'encoche du disque dans laquelle elle se trouve prisonnière.

Cependant, dans la pratique, il est nécessaire de prévoir des jeux de fonctionnement entre la préforme, le disque, et le guide. La préforme possède donc une certaine latitude de mouvement par rapport à ces deux éléments. Or, on s'est aperçu que cette latitude permettait à la préforme de vibrer sur la roue de transport, ceci étant plus particulièrement notable dans les installations à hautes cadences dans lesquelles la vitesse de déplacement de la préforme au niveau de la roue de transport est relativement importante. Ces vibrations peuvent affecter la précision de la position réelle du col de la préforme au niveau du point de préhension si bien que, dans certains cas, le dispositif de préhension et le col peuvent se trouver légèrement mais suffisamment décalés au point d'empêcher la préhension correcte de la préforme.

II est déjà connu de prévoir des dispositifs pour améliorer la stabilité de la préforme au moment de sa préhension, par exemple dans le document FR-A-2.794.109.

Ces dispositifs, bien qu'ayant donné satisfaction, présentent toutefois certaines limites, notamment lorsque le système de convoyage est amené à fonctionner à des cadences très élevées, de sorte que certaines préformes peuvent être saisies par un dispositif de préhension de manière incorrecte, ce qui peut produire des dysfonctionnement importants dans la machine.

La présente invention vise à remédier à cet inconvénient en proposant un système de convoyage qui comporte des moyens pour éjecter les préformes qui sont mal positionnées sur le dispositif de préhension associé.

Dans ce but, l'invention propose un système de convoyage du type décrit précédemment, caractérisé en ce que chaque dispositif de préhension est lié en déplacement axial, vers le haut et vers le bas, à une potence associée qui est montée coulissante axialement selon une direction et qui porte, à son extrémité axiale inférieure, un élément suiveur de came, la potence étant sollicitée axialement vers le bas de manière que l'élément suiveur de came coopère avec une surface d'une came fixe qui est prévue pour entraîner le dispositif de préhension depuis sa position haute dégagée vers sa position basse de préhension,
en ce que la potence comporte un plot muni d'une surface d'appui qui est prévue pour coopérer par glissement avec une rampe fixe comportant une surface de commande inclinée par rapport à la verticale et orientée globalement vers le haut, lorsque le dispositif de préhension occupe une position axiale intermédiaire entre sa position haute dégagée et sa position basse de préhension, cette position axiale intermédiaire correspondant à un positionnement incorrect du dispositif de préhension dans la préforme, de manière que la rampe fixe entraîne le plot vers le haut et qu'elle provoque le coulissement axial du dispositif de préhension jusqu'à sa position haute dégagée en vue de permettre l'éjection de la préforme associée,
et en ce que la rampe fixe s'étend axialement à une hauteur déterminée de sorte que, lorsque le dispositif de préhension occupe sa position basse de préhension, le plot puisse circuler sous la rampe fixe dans un passage aménagé à cet effet.

Selon d'autres caractéristiques de l'invention :
- le système de convoyage comporte une rampe mobile qui est susceptible d'occuper :
   - une position active dans laquelle une surface de commande de la rampe mobile est adjacente à l'extrémité amont de la surface de commande inclinée de la rampe fixe, et dans laquelle la surface de commande de la rampe mobile ferme l'entrée dudit passage, de manière à entraîner le plot vers le haut jusqu'à la rampe fixe ;
   - et une position escamotée dans laquelle la rampe mobile libère l'entrée dudit passage pour permettre au plot de circuler sous la rampe fixe,
   et le système de convoyage comporte un actionneur qui commande la rampe mobile en position active lorsqu'un dispositif de préhension occupe une position axiale intermédiaire ;
- l'actionneur est commandé par un capteur qui est susceptible de détecter lorsqu'un dispositif de préhension occupe une position axiale intermédiaire ;
- les éléments de transport sont liés les uns aux autres de manière à former une chaîne qui est enroulée sur une roue de transport montée à rotation autour d'un axe vertical, la roue de transport comporte une couronne comprenant des encoches prévues pour recevoir chacune une préforme munie d'une collerette en portant chaque préforme par sa collerette, chaque encoche est associée à une potence qui est solidaire à rotation de la roue de transport et qui est montée à coulissement par rapport à la roue de transport, et la rampe fixe est agencée le long de la roue de transport, en amont du point à partir duquel la chaîne quitte la roue de transport ;
- le système de convoyage comporte un barrage d'éjection fixe qui est agencé à la hauteur d'un tronçon de la préforme, lorsque la préforme est portée par une encoche, et qui est agencé en aval du point à partir duquel la chaîne quitte la roue de transport, de manière à éjecter les préformes qui resteraient dans les encoches après entraînement du plot vers le haut ;
- la surface de commande inclinée de la rampe fixe se prolonge en aval par une surface de commande intermédiaire, de manière à maintenir le dispositif de préhension en position dégagée au moins jusqu'au barrage d'éjection ;
- chaque dispositif de préhension comporte, à son extrémité axiale supérieure, un tronçon cylindrique muni de deux surfaces radiales d'appui en vis-à-vis, chaque potence comporte un pilier qui s'étend suivant une direction parallèle à l'axe de coulissement du dispositif de préhension associé, du côté de 'l'axe de rotation de la roue de transport par rapport au dispositif de préhension, et un bras de liaison qui est fixé sur le tronçon d'extrémité axiale supérieure du pilier et qui s'étend radialement vers l'extérieur, et le bras de liaison comporte, à son extrémité radiale externe, une fourchette qui reçoit le tronçon cylindrique du dispositif de préhension associé et qui comporte deux surfaces radiales de portée prévues pour coopérer avec les surfaces radiales d'appui du tronçon cylindrique de manière à lier en déplacement axial la potence et le dispositif de préhension.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective qui représente partiellement un système de convoyage réalisé conformément aux enseignements de l'invention, les dispositifs de préhension de préformes occupant leur position basse de préhension ;
- la figure 2 est une vue en coupe axiale suivant l'axe A1 qui représente partiellement la roue de transport et un dispositif de préhension en position haute dégagée ;
- la figure 3 est une vue similaire à celle de la figure 2 qui représente la roue de transport et un dispositif de préhension en position basse de préhension ;
- la figure 4 est une vue similaire à celle de la figure 2 qui représente la roue de transport et un dispositif de préhension en position axiale intermédiaire ;
- la figure 5 est une vue similaire à celle de la figure 1 qui représente le système d'aiguillage des plots associés aux dispositifs de préhension en position axiale intermédiaire équipant le système de convoyage de la figure 1, un plot étant représenté en appui sur la rampe fixe du système d'aiguillage ;
- la figure 6 est une vue en coupe suivant un plan vertical parallèle au sens de déplacement des préformes qui représente schématiquement le système d'aiguillage de la figure 5 lorsqu'un dispositif de préhension occupe une position axiale intermédiaire.

Dans la description qui va suivre, des éléments identiques, similaires ou analogues seront désignés par les mêmes chiffres de référence.

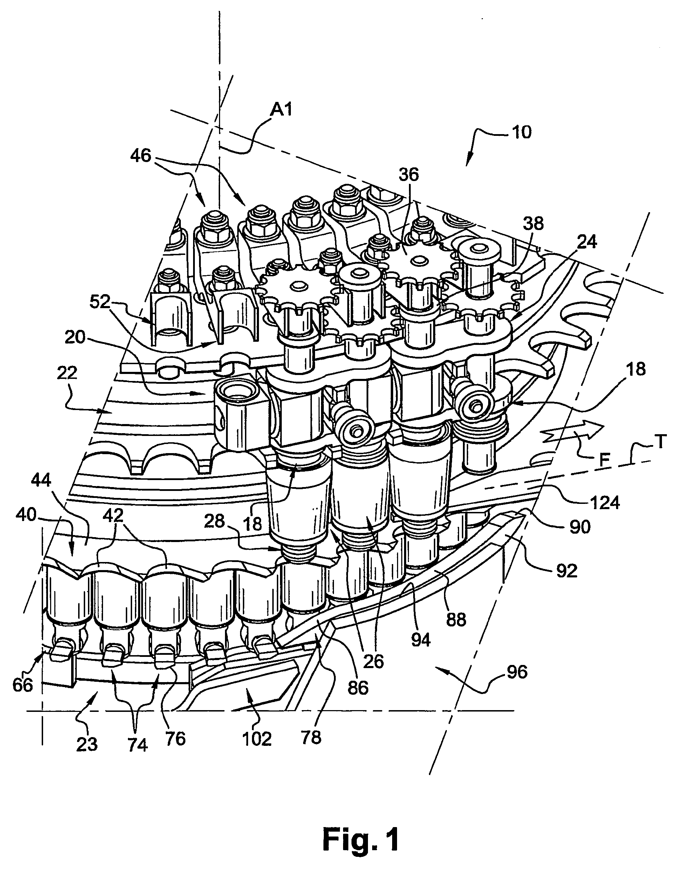

On a représenté sur les figures 1 à 4 un système de convoyage 10 pour une installation de fabrication par soufflage de récipients en matériau thermoplastique à partir de préformes 12, les préformes 12 étant préalablement obtenues par moulage par injection.

Chaque préforme 12 présente la forme d'un tube qui est fermé à une extrémité et dont l'autre extrémité possède la forme définitive du col 14 du récipient qui sera obtenu à partir de la préforme, le col 14 étant délimité vers le haut par une collerette 16 radiale externe.

Le système de convoyage 10 comporte une série d'éléments 18 de transport qui sont liés les uns aux autres de manière à former une chaîne 20 sans fin et qui sont prévus pour transporter les préformes 12 de l'amont vers l'aval, suivant la direction indiquée par la flèche F sur la figure 1.

Sur la figure 1, seule une portion de la chaîne 20 a été représentée. Cette portion de chaîne 20 est constituée ici par deux éléments 18 de transport.

La chaîne 20 d'éléments 18 de transport est enroulée partiellement sur une roue 22 de transport globalement en forme de tambour qui est montée à rotation autour d'un axe A1 vertical sur un socle 23 fixe.

Pour simplifier la représentation, seule une portion périphérique de la roue 22 de transport est représentée sur les figures 1 à 5.

Dans la suite de la description, sauf mention contraire, les directions axiales correspondent à des directions parallèles à l'axe (A1) de rotation de la roue 22 de transport.

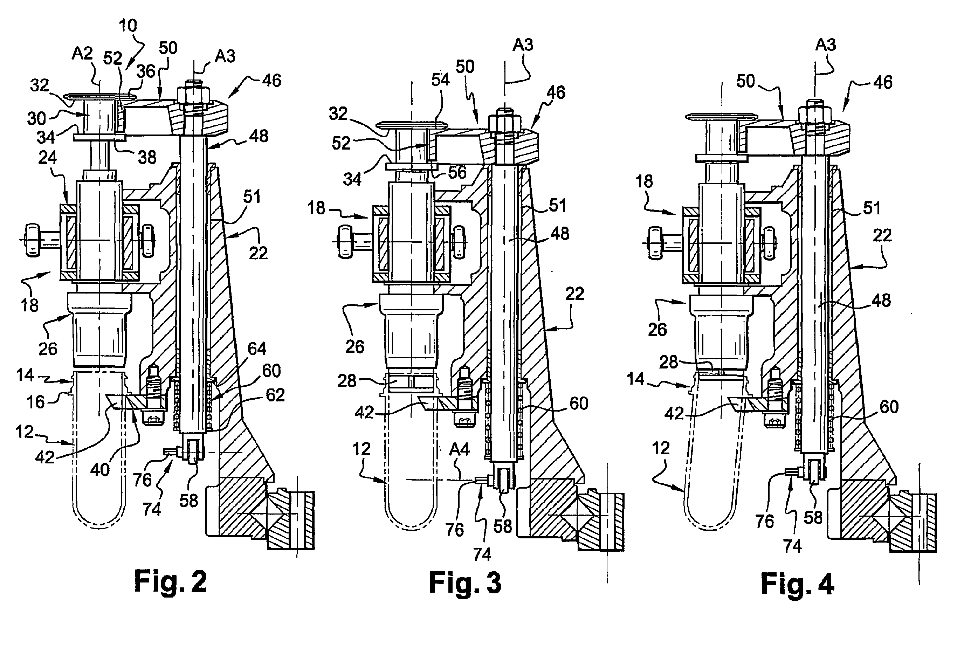

Chaque élément 18 de transport comporte ici une platine 24 en forme de maillon qui est équipée de deux dispositifs de préhension 26, chaque dispositif de préhension 26 comportant un mandrin 28 qui est monté mobile axialement par rapport à la platine 24 en forme de maillon, entre une position axiale haute dégagée, qui est illustrée par la figure 2, et une position axiale basse de préhension, qui est illustrée par la figure 3, dans laquelle le mandrin 28 s'engage axialement dans le col 14 d'une préforme 12 pour la saisir.

Chaque dispositif de préhension 26 comporte, à son extrémité axiale supérieure, un tronçon cylindrique 30 qui est solidaire du mandrin 28 en déplacement axial et qui est muni de deux surfaces radiales d'appui 32, 34 en vis-à-vis.

Selon le mode de réalisation représenté ici, chaque tronçon cylindrique 30 comporte, à chacune de ses extrémités axiales, respectivement une couronne dentée 36 et une collerette radiale externe 38.

Les deux surfaces radiales d'appui 32, 34 sont constituées ici par les surfaces radiales en vis-à-vis de la couronne dentée 36 et de la collerette radiale externe 38 associées du tronçon cylindrique 30.

La roue 22 de transport comporte une couronne 40 inférieure comprenant des encoches 42 externes qui sont prévues pour recevoir chacune une préforme 12. Chaque préforme 12 est reçue dans une encoche 42 de manière à reposer par sa collerette 16 sur la surface transversale supérieure 44 de la couronne 40 inférieure.

Chaque encoche 42 de la couronne 40 inférieure est associée à un dispositif de préhension 26 et à une potence 46 qui est solidaire à rotation de la roue 22 et qui est montée à coulissement axial par rapport à la roue 22.

Chaque potence 46 comporte un pilier 48 qui s'étend suivant une direction A3 parallèle à l'axe A2 de coulissement du dispositif de préhension 26 associé, du côté de l'axe A1 de rotation de la roue 22 de transport par rapport au dispositif de préhension 26, et un bras de liaison 50 qui est fixé sur le tronçon d'extrémité axiale supérieure du pilier 48 et qui s'étend radialement vers l'extérieur.

Conformément à une caractéristique de l'invention, le bras de liaison 50 comporte, à son extrémité radiale externe, une fourchette 52 qui reçoit le tronçon cylindrique 30 du dispositif de préhension 26 associé et qui comporte deux surfaces radiales 54, 56 de portée prévues pour coopérer avec les surfaces radiales d'appui 32, 34 du tronçon cylindrique 30 de manière à lier en déplacement axial la potence 46 et le dispositif de préhension 26.

Chaque pilier 48 est monté coulissant axialement selon ladite direction A3 dans un alésage cylindrique 51 qui est réalisé dans le corps de la roue 22 de transport, de manière que la potence 46 soit montée coulissante axialement par rapport à la roue 22 de transport.

Le pilier 48 comporte, à son extrémité axiale inférieure, un élément 58 suiveur de came, ici un galet qui est monté libre à rotation autour d'un axe A4 s'étendant suivant une direction radiale par rapport à l'axe A1 de rotation de la roue 22 de transport.

Un ressort 60 de compression à boudin est interposé axialement entre une surface radiale d'appui 62 qui est agencée sur le tronçon d'extrémité axiale inférieure du pilier 48 et une surface radiale d'appui 64 en vis-à-vis agencée sur le corps de la roue 22 de transport, de manière à solliciter la potence 46 axialement vers le bas.

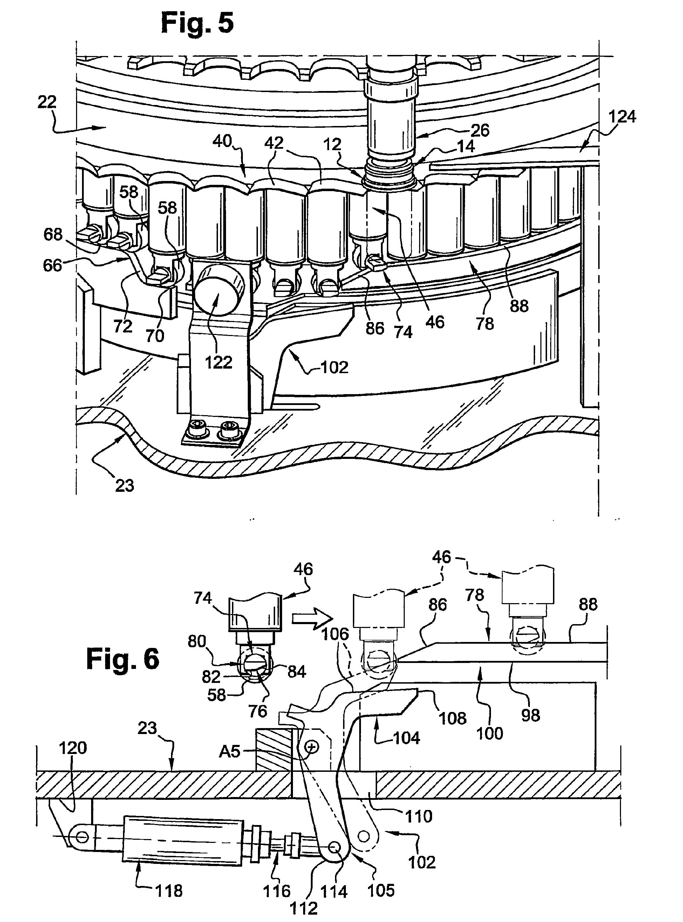

Comme on peut le voir plus particulièrement sur la vue de la figure 5, une came 66, qui s'étend circonférentiellement autour de l'axe A1 de rotation de la roue 22 de transport, est montée fixe sur le socle 23.

La surface de la came 66 constitue une piste de réception pour l'élément 58 suiveur de came équipant chaque potence 46, tout particulièrement une piste de roulement lorsque cet élément 58 est un galet.

La surface de la came 66 comporte un profil déterminé prévu pour commander la position axiale de chaque potence 46 en fonction de la position circonférentielle de la potence 46 par rapport à l'axe A1 de rotation de la roue 22 de transport. A cet effet, la hauteur de la surface de la came 66 varie circonférentiellement.

La position de l'élément 58 (ici le galet) suiveur de came sur la surface de la came 66 détermine donc la position axiale du mandrin 28.

La came 66 comporte ici un tronçon amont 68 dont la hauteur est telle que la potence 46 occupe sa position haute dégagée et un tronçon aval 70 dont la hauteur, inférieure à la hauteur du tronçon amont 68, est telle que la potence 46 occupe sa position basse de préhension.

Le tronçon amont 68 et le tronçon aval 70 sont raccordés par un tronçon incliné 72 qui permet à chaque galet de faire descendre la potence 46 depuis la position haute dégagée jusqu'à la position basse de préhension.

On note que la position basse de préhension est déterminée ici par une butée axiale, le bras de liaison 50 venant en appui axial contre le corps de la roue 22 de transport (figure 3). Aussi, le tronçon aval 70 n'est pas indispensable ici pour maintenir la potence 46 en position basse.

Selon une autre caractéristique de l'invention, chaque pilier 48 comporte un plot 74 qui est muni d'une surface d'appui 76 prévue pour coopérer par glissement avec une rampe fixe 78, lorsque le dispositif de préhension 26 associé est amené à occuper une position axiale intermédiaire entre sa position haute dégagée et sa position basse de préhension, cette position axiale intermédiaire correspondant à un positionnement incorrect du mandrin 28 associé dans le col 14 de la préforme 12.

Comme on peut le voir notamment sur la figure 6, le plot 74 comporte ici une plaque radiale 80 dont la face inférieure constitue la surface d'appui 76 qui coopère avec la rampe fixe 78.

La surface d'appui 76 est constituée ici par un pan radial 82 en amont et par un pan incliné 84 en aval.

La rampe fixe 78 comporte ici une surface de commande 86 amont, qui est inclinée suivant une pente ascendante vers l'aval, une surface de commande 88 intermédiaire, qui s'étend globalement dans un plan radial par rapport à l'axe A1 de rotation, et une surface de commande 90 aval, qui est inclinée suivant une pente descendante vers l'aval.

Les surfaces de commande 86, 88, 90 de la rampe fixe 78 sont orientées globalement vers le haut et elles sont adjacentes entre elles.

Avantageusement, la surface de commande 86 amont de la rampe fixe 78 et le pan incliné 84 du plot 74 sont sensiblement parallèles, lorsque le plot 74 vient en contact avec la surface de commande 86 amont.

La fonction des différentes surfaces de commande 86, 88, 90 de la rampe fixe 78 sera expliquée par la suite.

La rampe fixe 78 est constituée ici par une pièce rapportée qui est fixée, par une paroi axiale externe 92, sur la face axiale interne 94 d'une plaque axiale de support 96 fixée sur le socle 23 (figure 1).

La rampe fixe 78 est agencée axialement à une hauteur déterminée de manière que, lorsque le mandrin 28 d'un dispositif de préhension 26 occupe sa position basse de préhension, alors le plot 74 appartenant à la potence 46 associée puisse circuler sous la rampe fixe 78.

La rampe fixe 78 comporte ici une surface radiale inférieure 98, orientée vers le bas, qui constitue le toit d'un passage 100 permettant aux plots 74 de circuler sous la rampe fixe 78, lorsque les potences 46 associées occupent chacune leur position basse.

La rampe fixe 78 est agencée le long de la roue 22 de transport, en amont du point à partir duquel la chaîne 20 quitte la roue 22 de transport.

Sur la figure 1, on constate que l'élément 18 de transport situé en aval est représenté dans la position correspondant au point à partir duquel la chaîne 20 quitte la roue 22 de transport.

Avantageusement, le système de convoyage 10 est muni d'une rampe mobile 102 qui est prévue pour prolonger la surface de commande 86 amont de la rampe fixe 78, lorsqu'elle occupe une position active, représentée en traits fantômes sur la figure 6.

La rampe mobile 102 est montée pivotante par rapport au socle 23 autour d'un axe de pivotement A5 orienté globalement radialement par rapport à l'axe A1 de rotation de la roue 22 de transport, entre une position angulaire active et une position angulaire escamotée.

La rampe mobile 102 a ici la forme d'une plaque verticale qui est orthogonale à l'axe de pivotement A5 et qui comporte une portion formant doigt d'entraînement 104 et une portion formant levier 105.

Le doigt d'entraînement 104 est muni d'une surface de commande 106 transversale à la rampe mobile 102 qui est orientée vers le haut et qui, en position active, s'étend globalement dans le même plan que la surface de commande 86 amont de la rampe fixe 78.

Dans la position active de la rampe mobile 102, le bord d'extrémité libre 108 du doigt d'entraînement 104 est sensiblement adjacent à l'extrémité amont de la surface de commande 86 amont de la rampe fixe 78, ce qui ferme l'entrée amont du passage 100 situé sous la rampe fixe 78.

Dans la position escamotée de la rampe mobile 102, le doigt d'entraînement 104 pivote vers le bas de manière à libérer l'entrée amont du passage 100.

On note que la position escamotée constitue ici une position par défaut de la rampe mobile 102.

Le levier 105 s'étend ici vers le bas à travers une fenêtre 110 aménagée dans le socle 23.

L'extrémité libre 112 du levier 105 est liée par une articulation 114 à la tige de commande 116 d'un actionneur 118 qui est monté sur la face inférieure 120 du socle 23.

L'actionneur 118 est prévu pour commander le pivotement de la rampe mobile 102 entre ses deux positions angulaires, en agissant sur le levier 105 par l'intermédiaire de la tige de commande 116.

L'actionneur 118 peut être commandé par exemple de manière pneumatique.

Le système de convoyage 10 comporte ici un capteur 122 qui est agencé en amont au voisinage de la rampe mobile 102 et qui est susceptible de détecter la présence d'une potence 46 occupant une position axiale intermédiaire, de manière à commander l'actionneur 118 de manière adéquate.

On explique maintenant le fonctionnement du système de convoyage 10 selon l'invention en considérant une préforme 12 en particulier, depuis son arrivée sur la roue 22 de transport jusqu'à ce qu'elle quitte la roue 22 de transport.

La roue 22 de transport étant entraînée en rotation autour de son axe A1, elle provoque un mouvement de déplacement continu de la chaîne 20 d'éléments 18 de transport suivant le sens de la flèche F.

Le dispositif (non représenté) qui alimente la roue 22 de transport en préformes 12 dépose la préforme dans une encoche 42 de la couronne 40 inférieure, au niveau d'une zone d'alimentation (non représentée) située en amont du point où la chaîne 20 quitte la roue 22 de transport.

Au niveau de la zone d'alimentation, le mandrin 28 et la potence 46 associés à l'encoche 42 portant la préforme 12 occupent leur position haute dégagée, le galet constituant l'élément 58 suiveur de came associé circulant sur le tronçon amont 68 de la surface de la came 66.

Lorsque la préforme 12 parvient dans une zone de saisie, alors le galet descend du tronçon amont 68 de la surface de la came 66 vers le tronçon aval 70, sous la sollicitation du ressort 60 qui se détend, ce qui entraîne la potence 46 et le mandrin 28 vers leurs positions basses de préhension.

Dans le cas où le mandrin 28 s'engage correctement dans le col de la préforme 12, comme cela est représenté sur la figure 3, alors la potence 46 descend jusqu'à sa position basse de préhension. La préforme 12 est alors correctement saisie par le mandrin 28 ce qui permet le transport de la préforme 12 par l'élément 18 de transport associé vers l'aval, hors de la roue 22 de transport.

En position basse de préhension, le plot 74 associé à la potence 46 passe sous la rampe fixe 78, dans le passage 100, la rampe mobile 102 occupant sa position escamotée.

La potence 46 continue son déplacement circonférentiel autour de l'axe A1 de rotation de la roue 22 de transport, alors que l'élément 18 de transport quitte la roue 22 de transport en suivant le déplacement de la chaîne 20 selon la direction indiquée par la flèche F et le trait interrompu T.

Lorsque l'élément 18 de transport quitte la roue 22 de transport, les deux tronçons cylindriques 30 de chaque élément 18 de transport se désengagent des fourchettes 52 associées, de sorte que les dispositifs de préhension 26 ne sont plus liés aux potences 46.

Dans le cas où le mandrin 28 ne peut s'engager correctement dans la préforme 12 associée, comme cela est représenté sur la figure 4, alors la potence 46 ne peut descendre jusqu'à sa position basse de préhension. La potence 46 se bloque alors dans une position axiale intermédiaire, entre sa position haute dégagée et sa position basse de préhension.

Sur la figure 6, on a représenté en trait fort l'extrémité axiale inférieure d'une potence 46 qui occupe une telle position axiale intermédiaire, avant qu'elle atteigne une zone dite d'aiguillage comportant la rampe mobile 102 et la rampe fixe 78.

Cette position axiale intermédiaire est détectée par le capteur 122 qui commande alors l'actionneur 118 de manière à provoquer le basculement de la rampe mobile 102, dans le sens anti-horaire en considérant la figure 6, jusqu'à sa position active, qui est représentée en traits fantômes sur la figure 6.

Avantageusement, la rampe mobile 102 est commandée dans sa position active pendant un laps de temps qui est juste suffisant pour aiguiller le plot 74 associé à la potence 46 en position intermédiaire, sans agir sur les plots 74 associés aux potences 46 adjacentes qui se trouvent en position basse, donc correcte.

Lorsque la rampe mobile 102 occupe sa position active, le pan incliné 84 du plot 74 associé à la potence 46 en position intermédiaire vient en contact avec la surface de commande 106 de la rampe mobile 102, comme on peut le constater sur la figure 6 avec la première potence 46 en traits fantômes.

En raison du déplacement circonférentiel continu de la potence 46 autour de l'axe A1 de rotation, la surface d'appui 76 du plot 74 coopère par glissement avec la surface de commande 106 de la rampe mobile 102 puis la surface de commande 86 amont de la rampe fixe 78 pour entraîner la potence 46 depuis sa position intermédiaire vers le haut, jusqu'à sa position haute dégagée, de sorte que le mandrin 28 se désengage du col 14 de la préforme 12.

Lorsque le pan radial 82 de la surface d'appui 76 du plot 74 vient glisser sur la surface de commande 88 intermédiaire de la rampe fixe 78, comme on peut le constater sur la figure 5 et sur la figure 6 avec la seconde potence 46 en traits fantômes, alors la potence 46 vient occuper sa position haute dégagée.

La surface de commande 88 intermédiaire permet de maintenir la potence 46 en position haute dégagée pendant une portion circonférentielle déterminée de la rotation de la roue 22 de transport.

A ce stade, la préforme 12 n'est alors plus retenue ni par le mandrin 28, ni par un autre système de retenue, de sorte qu'elle peut être éjectée des encoches 42 de la roue 22 de transport.

La préforme 12 peut notamment tomber par gravitation et/ou sous l'effet de la force centrifuge.

Avantageusement, selon le mode de réalisation représenté ici, le système de convoyage 10 est équipé d'un barrage d'éjection 124 fixe qui est agencé en aval du point à partir duquel la chaîne 20 quitte la roue 22 de transport, de manière à éjecter toute préforme 12 qui resterait dans son encoche 42 après le dégagement du mandrin 28.

Le barrage d'éjection 124 a ici la forme d'une lame qui est sensiblement parallèle à la chaîne 20, lorsqu'elle quitte la roue 22 de transport, et qui s'étend partiellement au-dessus de la couronne 40 inférieure, de manière que le barrage d'éjection 124 soit à la hauteur du col 14 de la préforme 12 pour provoquer l'éjection de la préforme 12 hors de l'encoche 42 associée.

Avantageusement, le barrage d'éjection 124 s'étend au-dessus de la surface de commande 88 intermédiaire de la rampe fixe 78, et la surface de commande 90 aval de la rampe fixe 78 est agencée en aval du barrage d'éjection 124 de manière à entraîner la potence 46 vers sa position basse de préhension uniquement lorsque l'on est sûr qu'il n'y a plus de préforme 12 dans l'encoche 42 associée.

Bien entendu, la surface de la came 66 comporte, en aval de la rampe fixe 78, un tronçon ascendant (non représenté) qui permet d'entraîner chaque potence 46 depuis sa position basse de préhension jusqu'à sa position haute dégagée, pour permettre de nouveau la saisie de préformes 12.

Selon une variante de réalisation (non représentée), le système de convoyage 10 selon l'invention peut être dépourvu de rampe mobile 102. Il suffit pour cela de positionner l'extrémité libre de la surface de commande 86 amont à une hauteur adéquate de manière à aiguiller vers le haut tous les plots 74 associés à des potences 46 en position intermédiaire et de manière à laisser passer tous les plots 74 associés à des potences 46 en position basse.

## Revendications

1. Système de convoyage (10) pour une installation de fabrication par soufflage de récipients en matériau thermoplastique à partir de préformes (12), du type comportant une série d'éléments (18) de transport qui sont munis chacun d'au moins un dispositif de préhension (26) destiné à porter une préforme (12) en vue de la faire circuler en position verticale le long d'un parcours, orienté de l'amont vers l'aval, à l'intérieur de l'installation, du type dans lequel chaque dispositif de préhension (26) est mobile suivant un axe (A2) vertical par rapport à l'élément (18) de transport qui le porte pour, lorsqu'il est amené d'une position haute dégagée jusqu'à une position basse de préhension, s'engager axialement dans le col (14) de la préforme (12) et la saisir,
**caractérisé en ce que** chaque dispositif de préhension (26) est lié en déplacement axial, vers le haut et vers le bas, à une potence (46) associée qui est montée coulissante axialement selon une direction (A3) et qui porte, à son extrémité axiale inférieure, un élément (58) suiveur de came, la potence (46) étant sollicitée axialement vers le bas de manière que l'élément (58) suiveur de came coopère avec une surface d'une came (66) fixe qui est prévue pour entraîner le dispositif de préhension (26) depuis sa position haute dégagée vers sa position basse de préhension,
**en ce que** la potence (46) comporte un plot (74) muni d'une surface d'appui (76) qui est prévue pour coopérer par glissement avec une rampe fixe (78) comportant une surface de commande (86) inclinée par rapport à la verticale et orientée globalement vers le haut, lorsque le dispositif de préhension (26) occupe une position axiale intermédiaire entre sa position haute dégagée et sa position basse de préhension, cette position axiale intermédiaire correspondant à un positionnement incorrect du dispositif de préhension (26) dans la préforme (12), de manière que la rampe fixe (78) entraîne le plot (74) vers le haut et qu'elle provoque le coulissement axial du dispositif de préhension (26) jusqu'à sa position haute dégagée en vue de permettre l'éjection de la préforme (12) associée,
et **en ce que** la rampe fixe (78) s'étend axialement à une hauteur déterminée de sorte que, lorsque le dispositif de préhension (26) occupe sa position basse de préhension, le plot (74) puisse circuler sous la rampe fixe (78) dans un passage (100) aménagé à cet effet.

2. Système de convoyage (10) selon la revendication précédente, **caractérisé en ce qu'**il comporte une rampe mobile (102) qui est susceptible d'occuper :
- une position active dans laquelle une surface de commande (106) de la rampe mobile (102) est adjacente à l'extrémité amont de la surface de commande (86) inclinée de la rampe fixe (78), et dans laquelle la surface de commande (106) de la rampe mobile (102) ferme l'entrée dudit passage (100), de manière à entraîner le plot (74) vers le haut jusqu'à la rampe fixe (78) ;
- et une position escamotée dans laquelle la rampe mobile (102) libère l'entrée dudit passage (100) pour permettre au plot (74) de circuler sous la rampe fixe (78),
et **en ce qu'**il comporte un actionneur (118) qui commande la rampe mobile (102) en position active lorsqu'un dispositif de préhension (26) occupe une position axiale intermédiaire.

3. Système de convoyage (10) selon la revendication précédente, **caractérisé en ce que** l'actionneur (118) est commandé par un capteur (122) qui est susceptible de détecter lorsqu'un dispositif de préhension (26) occupe une position axiale intermédiaire.

4. Système de convoyage (10) selon l'une quelconque des revendications précédentes, **caractérisé en ce que** les éléments (18) de transport sont liés les uns aux autres de manière à former une chaîne (20) qui est enroulée sur une roue (22) de transport montée à rotation autour d'un axe (A1) vertical, **en ce que** la roue (22) de transport comporte une couronne (40) comprenant des encoches (42) prévues pour recevoir chacune une préforme (12) munie d'une collerette (16) en portant chaque préforme (12) par sa collerette (16), **en ce que** chaque encoche (42) est associée à une potence (46) qui est solidaire à rotation de la roue (22) de transport et qui est montée à coulissement par rapport à la roue (22) de transport, et **en ce que** la rampe fixe (78) est agencée le long de la roue (22) de transport, en amont du point à partir duquel la chaîne (20) quitte la roue (22) de transport.

5. Système de convoyage (10) selon la revendication précédente, **caractérisé en ce qu'**il comporte un barrage d'éjection (124) fixe qui est agencé à la hauteur d'un tronçon de la préforme (12), lorsque la préforme (12) est portée par une encoche (42), et qui est agencé en aval du point à partir duquel la chaîne (20) quitte la roue (22) de transport, de manière à éjecter les préformes (12) qui resteraient dans les encoches (42) après entraînement du plot (74) vers le haut.

6. Système de convoyage (10) selon la revendication précédente, **caractérisé en ce que** la surface de commande (86) inclinée de la rampe fixe (78) se prolonge en aval par une surface de commande (88) intermédiaire, de manière à maintenir le dispositif de préhension (26) en position dégagée au moins jusqu'au barrage d'éjection (124).

7. Système de convoyage (10) selon l'une quelconque des revendications 4 à 6, **caractérisé en ce que** chaque dispositif de préhension (26) comporte, à son extrémité axiale supérieure, un tronçon cylindrique (30) muni de deux surfaces radiales d'appui (32, 34) en vis-à-vis, **en ce que** chaque potence (46) comporte un pilier (48) qui s'étend suivant une direction parallèle à l'axe (A2) de coulissement du dispositif de préhension (26) associé, du côté de l'axe (A1) de rotation de la roue (22) de transport par rapport au dispositif de préhension (26), et un bras de liaison (50) qui est fixé sur le tronçon d'extrémité axiale supérieure du pilier (48) et qui s'étend radialement vers l'extérieur, et **en ce que** le bras de liaison (50) comporte, à son extrémité radiale externe, une fourchette (52) qui reçoit le tronçon cylindrique (30) du dispositif de préhension (26) associé et qui comporte deux surfaces radiales (54, 56) de portée prévues pour coopérer avec les surfaces radiales d'appui (32, 34) du tronçon cylindrique (30) de manière à lier en déplacement axial la potence (46) et le dispositif de préhension (26).

## Claims

1. A conveyor system (10) for an installation for the manufacture of thermoplastic containers by blow molding using preforms (12), of the type comprising a number of transport elements (18) which each have at least one grasping device (26) for carrying a preform (12) so as to convey it, in the vertical position, along a path in the downstream direction, inside the installation, of the type in which each grasping device (26) can move along a vertical axis (A2) relative to the transport element (18) carrying it so as, when it is brought from an upper release position to a lower grasping position, to engage axially in the neck (14) of the preform (12) to be seized,
**characterized in that** each grasping device (26) is linked in terms of upward and downward axial movement to an associated bracket (46) which is mounted so that it can slide axially in one direction (A3) and which bears, at its lower axial end, a cam follower element (58), the bracket (46) being stressed axially downward so that the cam follower element (58) interacts with a surface of a fixed cam (66) provided to bring the grasping device (26) from its upper release position to its lower grasping position,
**in that** the bracket (46) comprises a stud (74) with a bearing surface (76) designed to interact slidingly with a fixed ramp (78) comprising a control surface (86) which is inclined relative to the vertical and oriented generally upward, when the grasping device (26) is in an intermediate axial position between its upper release position and its lower grasping position, this intermediate axial position corresponding to an incorrect positioning of the grasping device (26) in the preform (12), so that the fixed ramp (78) brings the stud (74) upward and causes the grasping device (26) to slide axially into its upper release position so as to eject the associated preform (12),
and **in that** the fixed ramp (78) extends axially at a certain height in such a way that, when the grasping device (26) is in its lower grasping position, the stud (74) can travel under the fixed ramp (78) in a passage (100) provided for this purpose.

2. The conveyor system (10) as claimed in the preceding claim, **characterized in that** it comprises a movable ramp (102) which can take up:
- an active position in which a control surface (106) of the movable ramp (102) is adjacent to the upstream end of the inclined control surface (86) of the fixed ramp (78), and in which the control surface (106) of the movable ramp (102) closes off the entry to said passage (100) so as to drive the stud (74) upward onto the fixed ramp (78);
- and a retracted position in which the movable ramp (102) clears said passage (100) to allow the stud (74) to travel under the fixed ramp (78),
and **in that** it comprises an actuator (118) that causes the movable ramp (102) to take up the active position when a grasping device (26) is in an intermediate axial position.

3. The conveyor system (10) as claimed in the preceding claim, **characterized in that** the actuator (118) is controlled by a sensor (122) which can detect when a grasping device (26) is in an intermediate axial position.

4. The conveyor system (10) as claimed in any one of the preceding claims, **characterized in that** the transport elements (18) are connected to one another so as to form a chain (20) that is wound around a transport wheel (22) mounted rotatably on a vertical axis (A1), **in that** the transport wheel (22) comprises a ring (40) having recesses (42) each designed to receive a preform (12) with a collar (16), carrying each preform (12) by its collar (16), **in that** each recess (42) is associated with a bracket (46) that is integral in terms of rotation with the transport wheel (22) and mounted so as to be able to slide relative to the transport wheel (22), and **in that** the fixed ramp (78) is arranged along the transport wheel (22), upstream of the point at which the chain (20) leaves the transport wheel (22).

5. The conveyor system (10) as claimed in the preceding claim, **characterized in that** it comprises a fixed ejection bar (124) positioned at the same height as a portion of the preform (12), when the preform (12) is carried by a recess (42), and positioned downstream of the point at which the chain (20) leaves the transport wheel (22), so as to eject the preforms (12) remaining in the recesses (42) after the stud (74) has been driven upward.

6. The conveyor system (10) as claimed in the preceding claim, **characterized in that** the inclined control surface (86) of the fixed ramp (78) is extended downstream by an intermediate control surface (88), so as to keep the grasping device (26) in the release position at least as far as the ejection bar (124).

7. The conveyor system (10) as claimed in any one of claims 4 to 6, **characterized in that** each grasping device (26) comprises, at its upper axial end, a cylindrical portion (30) with two facing radial bearing surfaces (32, 34), **in that** each bracket (46) comprises a post (48) extending in a direction parallel to the axis (A2) of sliding of the associated grasping device (26), on the side of the axis of rotation (A1) of the transport wheel (22) relative to the grasping device (26), and a connecting arm (50) fixed to the upper axial end portion of the post (48) and extending radially outward, and **in that** the connecting arm (50) comprises, at its radial outer end, a fork (52) that receives the cylindrical portion (30) of the associated grasping device (26) and comprises two radial bearing surfaces (54, 56) designed to interact with the radial bearing surfaces (32, 34) of the cylindrical portion (30) so as to link the bracket (46) and grasping device (26) in terms of axial movement.

## Patentansprüche

1. Fördersystem (10) für eine Anlage zur Herstellung von Behältern aus einem thermoplastischen Material aus Vorformlingen (12) durch Blasformen, der Art, welche eine Reihe von Transportelementen (18) aufweist, die jeweils mit wenigstens einer Greifeinrichtung (26), ausgestattet sind, die dazu dient, einen Vorformling (12) zu tragen, um diesen in vertikaler Position entlang eines Wegs, ausgerichtet von vorne nach hinten, im Innern der Anlage umlaufen zu lassen, der Art, bei welcher jede Greifeinrichtung (26) entlang einer Achse (A2), die bezogen auf das Transportelement (18), das sie trägt, vertikal ist, beweglich ist, um, wenn es von einer hohen freien Position zu einer niedrigen Greifposition gebracht wird, axial auf den Hals (14) des Vorformlings (12) aufzusetzen und diesen zu erfassen,
**dadurch gekennzeichnet, dass** jede Greifeinrichtung (26) in axialer Versetzung nach oben und nach unten mit einem zugeordneten Träger (46) verbunden ist, der entlang einer Richtung (A3) axial gleitend angebracht ist und an seinem axialen unteren Ende ein Nockenmitläuferelement (58) aufweist, wobei der Träger (46) derart axial nach unten belastet wird, dass das Nockenmitläuferelement (58) mit der Oberfläche eines feststehenden Nockens (66) zusammenwirkt, der vorgesehen ist, um die Greifeinrichtung (26) von der hohen freien Position zur niedrigen Greifposition anzutreiben,
**dadurch gekennzeichnet, dass** der Träger (46) eine Kontaktstelle (74) aufweist, die mit einer Auflagefläche (76) versehen ist, die dazu vorgesehen ist, durch Gleiten mit einer feststehenden Rampe (78) zusammenzuwirken, die eine Steuerfläche (86) aufweist, die bezogen auf die Vertikale geneigt ist und im Wesentlichen nach oben ausgerichtet ist, wenn die Greifeinrichtung (26) eine axiale Zwischenposition einnimmt, die zwischen der hohen freien Position und der niedrigen Greifposition liegt, wobei die axiale Zwischenposition einer nicht richtigen Positionierung der Greifeinrichtung (26) in einem Vorformling (12) entspricht, so dass die feststehende Rampe (78) die Kontaktstelle (74) nach oben antreibt und das axiale Gleiten der Greifeinrichtung (26) bis zur hohen freien Position bewirkt, um das Auswerfen des zugeordneten Vorformlings (12) zu ermöglichen,
und **dadurch gekennzeichnet, dass** sich die feststehende Rampe (78) axial mit einer vorbestimmten Höhe erstreckt, so dass, wenn die Greifeinrichtung (26) die niedrige Greifposition einnimmt, das Kontaktstück (74) auf der feststehenden Rampe (78) in einer zu diesem Zeck vorgesehenen Rinne(100) umlaufen kann.

2. Fördersystem (10) gemäß dem vorausgegangenen Anspruch, **dadurch gekennzeichnet, dass** es eine bewegliche Rampe (102) aufweist, die in der Lage ist:
eine aktive Position einzunehmen, in der eine Steuerfläche (106) der beweglichen Rampe (102) an das vordere Ende der geneigten Steuerfläche (86) der feststehenden Rampe (78) angrenzt, und in der die Steuerfläche (106) der beweglichen Rampe (102) den Eingang der Rinne (100) schließt, so dass das Kontaktstück (74) nach oben bis zur feststehenden Rampe (78) angetrieben wird;
und eine eingezogene Position einzunehmen, in der die bewegliche Rampe (102) den Eingang der Rinne (100) freigibt, um zu ermöglichen, dass das Kontaktstück (74) unter der feststehenden Rampe (78) umläuft,
und **dadurch gekennzeichnet, dass** es eine Betätigungseinrichtung (118) aufweist, die die bewegliche Rampe (102) in die aktive Position bringt, wenn eine Greifeinrichtung (26) eine axiale Zwischenposition einnimmt.

3. Fördersystem (10) gemäß dem vorausgegangenen Anspruch, **dadurch gekennzeichnet, dass** die Betätigungseinrichtung (118) von einem Sensor (122) gesteuert wird, der in der Lage ist zu erkennen, wann eine Greifeinrichtung (26) eine axiale Zwischenposition einnimmt.

4. Fördersystem (10) gemäß einem der vorausgegangenen Ansprüche, **dadurch gekennzeichnet, dass** die Transportelemente (18) miteinander verbunden sind, so dass sie eine Kette (20) bilden, die auf einem Transportrad (22) aufgerollt ist, das in Rotation um eine vertikale Achse (A1) angebracht ist, **dadurch**, dass das Transportrad (22) einen Kranz aufweist, der Kerben (42) aufweist, die vorgesehen sind, um jeweils einen Vorformling (12) aufzunehmen, der mit einem Rand (16) ausgestattet ist, indem jeder Vorformling (12) an seinem Rand (16) gehalten wird, dass jede Kerbe (42) einem Träger (46) zugeordnet ist, der mit dem Transportrad (22) drehfest verbunden und relativ zum Transportrad (22) gleitend angebracht ist, und dass die feststehende Rampe (78) entlang des Transportrads (22) vor dem Punkt, an dem die Kette (20) das Transportrad (22) verlässt, angeordnet ist.

5. Fördersystem (10) gemäß dem vorausgegangenen Anspruch, **dadurch gekennzeichnet, dass** es eine feststehende Auswurfsperre (124) aufweist, die auf der Höhe eines Teilstücks des Vorformlings (12) angeordnet ist, wenn der Vorformling (12) von einer Kerbe (42) gehalten wird, und die hinter einem Punkt, an dem die Kette (20) das Transportrad (22) verlässt, angeordnet ist, um die Vorformlinge (12) auszuwerfen, die in den Kerben (42) verbleiben, nachdem das Kontaktstück (74) nach oben angetrieben wurde.

6. Fördersystem (10) gemäß dem vorausgegangenen Anspruch, **dadurch gekennzeichnet, dass** sich die geneigte Steuerfläche (86) der feststehenden Rampe (78) nach hinten durch eine zwischengesetzte Steuerfläche (88) verlängert, um die Greifeinrichtung (26) mindestens bis zur Auswurfsperre (124) in freier Position zu halten.

7. Fördersystem (10) gemäß einem der Ansprüche 4 bis 6, **dadurch gekennzeichnet, dass** jede Greifeinrichtung (26) an ihrem oberen axialen Ende ein zylinderförmiges Teilstück (30) aufweist, das mit zwei sich gegenüberliegenden radialen Auflageflächen (32, 34) ausgestattet ist, **dadurch**, dass jeder Träger (46) eine Säule (48) aufweist, die sich entlang einer zur Achse (A2) parallelen Gleitrichtung der zugeordneten Greifeinrichtung (26) an der Seite der Rotationsachse (A1) des Transportrads (22) bezogen auf die Greifeinrichtung (26) erstreckt, sowie einen Verbindungsarm (50), der an dem oberen axialen Endstück der Säule (48) befestigt ist und der sich radial nach außen erstreckt, und **dadurch**, dass der Verbindungsarm (50) an seinem radialen äußeren Ende eine Gabel (52) aufweist, die das zylinderförmige Teilstück (30) der zugeordneten Greifeinrichtung (26) aufnimmt, und die zwei radiale tragende Flächen (54, 56) aufweist, die vorgesehen sind, um mit den radialen Auflageflächen (32, 34) des zylinderförmigen Teilstücks (30) zusammenzuwirken, um in axialer Versetzung den Träger (46) und die Greifeinrichtung (26) zu verbinden.
